# EUROPEAN PATENT APPLICATION

(11) **EP 4 338 567 A1**
(43) Date of publication of application: **20.03.2024**
(21) Application number: 23197284.5
(22) Date of filing: 13.09.2023
(51) Int. Cl.: A01D 34/43, A01D 34/56, A01D 69/06, F16H 1/20, F16H 57/021

(54) **A FLAIL MOWER WITH AN INCREASED WORKING WIDTH**

(30) Priority: 14.09.2022 SI 202200197
(71) Applicant: Tehnos d.o.o. Zalec, 3310 Zalec (SI)
(72) Inventor: Kisovar, Urban, 3312 Prebold (SI); Adamic, Gregor, 3212 Vojnik (SI)
(74) Representative: Patentni Biro AF d.o.o.

(57) **Abstract**

The flail mower with the increased working width is characterised by the replacement of the standard belt transmission with a slim gear transmission. The flail mower comprises:
- flail mower housing (8), within which the rotor (7) with hammers (7a) is rotatably mounted,
- bevel gearbox (1) for changing the torque angle from a torque perpendicular to the rotor (7) to a torque parallel to the rotor (7),
- an element (2) for transferring torque with the mentioned gearbox for changing the torque angle to the gear transmission,
- the gear transmission housing, mounted on one side of the flail mower housing (8),
- gear transmission, which comprises at least two, preferably three spur gears (4, 5, 6), in contact with each other and arranged vertically, wherein the lowermost gear is connected to the rotor (7) with hammers (7a), and
- a connecting element (9), which is installed between the gear (6) and the rotor (7) for connecting the two elements.

## Description

### Field of the invention

The present invention belongs to the field of agricultural machines, more precisely to the field of flail mowers. The invention relates to a flail mower with an increased working width.

### Background of the invention and the technical problem

Flail mowers are agricultural machines used to clean and accelerate decomposition and green manure. It is a tractor attachment that reduces the size of crop residues with working tools, called hammers, mounted on the rotor. The torque originates from the tractor, from where it is transferred to the bevel gearbox through the PTO shaft. The bevel gearbox changes the torque angle and increases the revolutions. The power is then transferred to the rotor with hammers through belt transmission.

Although belt transmission works decently, it has a negative effect on the machine's working width, as it requires a larger installation space, which narrows the space made available for the rotor. The space is therefore narrower than it could have been. Namely, according to the Rules on parts and equipment of vehicles in force in Slovenia or similar regulations in force in other countries, which lay down the maximum permissible dimensions and weights of vehicles in road transport and the requirements for vehicle parts and equipment, the maximum permissible width of tractors on a commercial road with trailers or tractor attachments is usually limited to a maximum of 306 cm. Taking this into account, a model with a working width of 280 cm and a total transport width of 306 cm has so far been the most suitable for users wishing to drive the flail mower on the road, as belt transmission requires about 20 cm. The transport width of any larger belt-driven machine no longer met the requirements of the legislation.

In the event of overloading, belt transmission is supposed to slip, but in practice it can happen that belt slippage does not occur quickly enough, which can lead to damage to the tractor or the rotor.

In addition, belt transmission also means a loss of machine power and higher fuel consumption. Last but not least, belt transmission requires regular maintenance by changing the belts to keep the flail mower working properly and optimally.

The technical problem, solved by the present invention, is the constructional design of a flail mower that addresses the disadvantages of the known solutions. Particularly, it the aim of the invention is to increase the working width of the flail mower in comparison to known flail mowers.

### Prior art

As mentioned above, belt transmission is used to transmit the torque from the tractor to the rotor via the PTO shaft, the bevel gearbox and the extension. This solution is disclosed, for example, in patent ES2401273B1 and model ES1005925U.

### Description of the solution to the technical problem

The present invention solves the problems of the above-described flail mowers. The technical problem is solved as defined in the independent claim, wherein the preferred embodiments are described in dependent claims.

The essence of the invention is in that belt transmission is replaced by a slim gear transmission with spur gears. The gear transmission comprises at least two gears which are in contact with each other so that the rotor rotates in the right direction. In the preferred embodiment, there are three gears. In alternative embodiments, there could be more gears, however, this would make the design of the flail mower unnecessarily complicated and expensive.

The flail mower according to the invention thus comprises:
- a flail mower housing, within which a rotor with hammers is rotatably mounted,
- a gearbox for changing the torque angle from a torque perpendicular to the rotor to a torque parallel to the rotor, the preferred gearbox being implemented as a bevel gearbox mounted on the flail mower housing for transferring the torque from the PTO shaft, when connected, to the second PTO shaft,
- a torque transfer element for transferring torque from the gearbox for changing the torque angle to gear transmission, wherein the preferred embodiment of said element is a second PTO shaft connected at one end to the said gearbox, preferably to a bevel gearbox, and at the other end to one of at least two gears of the gear transmission, wherein preferably the second PTO shaft is preferably provided with a shear clutch for overload protection,
- a gear transmission housing, mounted on one side of the flail mower housing,
- gear transmission, which includes at least two, preferably three spur gears in contact with each other and arranged vertically, wherein the lowermost gear is connected to the rotor with hammers, and
- a connecting element, preferably a parallel key, which is installed between the gear and the rotor to connect these elements, the parallel key being fitted in a keyway formed by the keyways in the gear and the rotor and secured against failure by a retaining ring.

The torque is thus transferred from the tractor through the PTO shaft, bevel gearbox, the second PTO shaft and the gear transmission to the rotor. The connecting element may be any suitable element known to an expert in the field. Thus, the shaft couplings can be different and can be adapted as necessary. The preferred solution uses a parallel key, which may be replaced by any other element performing the same function of connecting the gear and the rotor.

The gear transmission housing and the gear transmission itself are designed to be as slim as possible. This shall preferably be achieved by having at least two gears with integrated bearings on the left side of the housing, which reduces the thickness of the overall transmission, with the sides of the gears being as close to the housing as possible. These gears are extended to the right side to allow them to be mounted to the right bearing. If the gear transmission is designed with three gears, the middle gear can have only one bearing in the middle, no additional bearing is needed as the remaining two gears provide stability for the middle gear.

Furthermore, the housing walls shall be as thin as possible and preferably made by casting. Casting can be used for wall thicknesses of 0.7 cm, but the walls can also be wider. Even thinner walls could be made by milling, but this process is too expensive. The housing is not widened in the axial direction where it would narrow the working space but widened in the radial direction to achieve the desired oil volume while allowing the widest possible working width. The parallel key, with its keyway, takes up minimal space and therefore does not require axial expansion, thus allowing a slim design of the gear transmission housing.

The gearbox for changing the torque angle is preferably a bevel gearbox, but may be any other suitable gearbox, assembly, or element capable of converting torque perpendicular to the rotor of the flail mower into torque parallel to the rotor. The bevel gearbox comprises two shafts and two gears, each mounted on its own shaft and meshing with each other. The input shaft is connected to the tractor via a PTO shaft and the output shaft is connected to the first gear of the gear transmission via a second PTO shaft. Alternatively, a hydraulic drive may be used instead of the bevel gearbox, comprising a hydraulic motor driven by a hydraulic pump mounted on the tractor, or an electric motor drive, which may be powered from the tractor or, in a stand-alone version, on the flail mower using batteries.

The PTO shaft is the most cost-effective and functional solution for transmitting torque to the gear transmission. Instead of the second PTO shaft, any other suitable connection known to an expert in the relevant field that allows the torque to be transmitted from the bevel gearbox or its equivalent to the gear transmission could be used. For example, an extension could be used in combination with rubber couplings to compensate for the misalignment of the output shaft on the bevel gearbox and the first gear of the gear transmission.

The flail mower has double overload protection and reduces the possibility of damage to the tractor or the rotor, thanks to a shear clutch and a parallel key. A shear clutch on the second PTO shaft allows instant stopping of the torque transfer and protects the flail mower against overloads. The safety function of the shear clutch is provided by a bolt located on the two-piece joint of the PTO shaft. In the event of an overload, the bolt is cut off, causing the PTO shaft connecting the bevel gearbox and the gear transmission to rotate to idle as one part of the link rotates and the other stops.

The second level of protection is provided by the parallel key, which is located between the gear and the rotor. If the parallel key also breaks due to overloading, the torque transmission between the gear and the rotor or its shaft is stopped.

The advantages of the flail mower in accordance with the invention are numerous:
- Reduced width of the transmission or increased working width of the machine: replacing belt transmission with gear transmission with spur gears reduces the width of the transmission thus allowing extra working width. In this case, the width of the transmission is reduced from approximately 20 cm to approximately 4,5 cm, which means that not only a 280 cm flail mower but also a 300 cm flail mower will comply with the legal requirements, as it will not exceed the maximum permitted width on the road, which in Slovenia, and generally also elsewhere, is limited to a maximum of 306 cm.
- Reduced power loss and consequently reduced fuel consumption compared to belt transmission: gear transmission has 3% - 4% less power loss compared to belt transmission. With belt transmission, the belts slip and generate more heat, resulting in greater power losses. With gear transmission, on the other hand, the gears cause less friction by meshing and, as a result, the efficiency is higher. Assuming the tractor uses 65 kW of power to drive the flail mower, this represents a significant power saving (2,2 kW). Consequently, the fuel consumption is also reduced.
- Greater durability of the machine: with the current solution, more heat is generated due to the sliding of the belts, and excessive heating can also cause the belts to slip. The advantage of the no-slip improvement is the possibility of operation in difficult working conditions, and greater durability of the machine. In practice, this also means that working speeds can be higher.
- Reduced need for machine maintenance and otherwise easier maintenance: gear transmission requires less maintenance, as only an oil change is prescribed, while belts usually need to be changed several times during the machine's life cycle. Also, if only one belt needs to be replaced, all must be replaced at the same time. Gears have a longer lifespan than the machine itself. Changing oil is also cheaper and faster than changing belts.
- The mentioned double overload protection and less chance of damage to the tractor or the rotor.

The described flail mower design is particularly suitable for tractor flail mowers.

The flail mower with increased working width will be described in further detail based on an exemplary embodiment and figures, which show:
- Figure 1: The flail mower in accordance with the exemplary embodiment
- Figure 2: Side section of the gear transmission with housing
- Figure 3: The connection of the gear transmission with the rotor

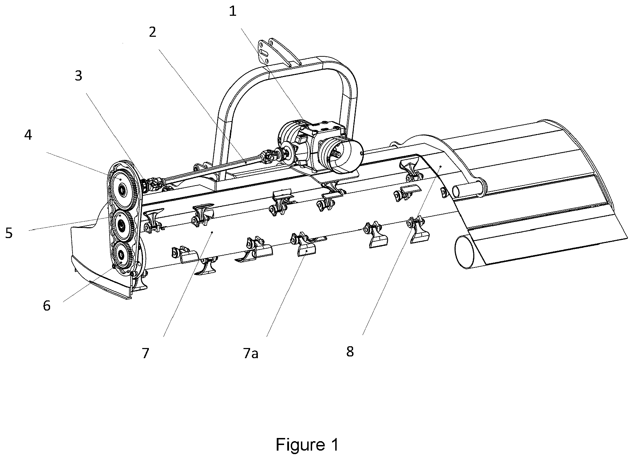

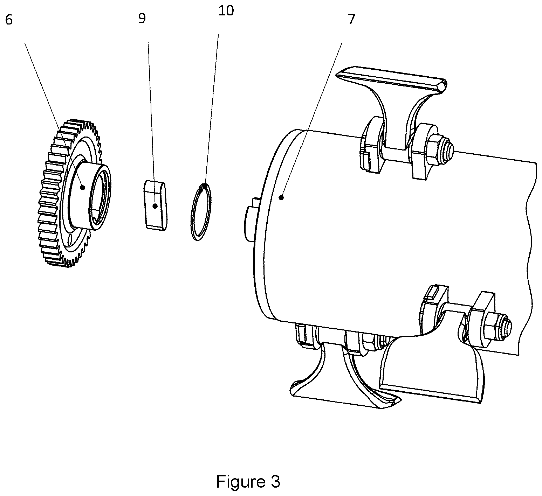

As shown in Figure 1, the flail mower in accordance with the exemplary embodiment comprises:
- flail mower housing 8, within which the rotor 7 with hammers 7a is rotatably mounted,
- bevel gearbox 1, mounted on the flail mower housing 8, for the transfer of torque from the PTO shaft, when connected, to the second PTO shaft 2,
- a second PTO shaft 2, which is connected to the mentioned bevel gearbox 1, and with the upper gear 4 of the three gears of the gear transmission at the other end,
- gear transmission, which comprises three spur gears 4, 5, 6, in contact with each other and arranged vertically, wherein the lowermost gear 6 is connected to the rotor 7 with hammers 7a,
- shear clutch 3, which is installed on the second PTO shaft 2,
- parallel key 9 (as seen in Figure 3), which is installed between the lowermost gear 6 and the rotor 7 and is axially fixated by a retaining ring 10 (as seen in Figure 3).

The torque is transferred from the bevel gearbox 1 through the second PTO shaft 2 to the first gear 4. On the PTO shaft 2 the shear clutch 3 is located, providing the first overload protection. In the case of excessive torque, the bolt on the clutch is cut off and PTO shaft 2 rotates to idle. Then, the torque is transmitted via the first gear 4, the second gear 5 and the third gear 6 to the rotor 7 with hammers 7a. Between the third gear 6 and the rotor 7 there is a parallel key 9, which also provides overload protection. The rotor 7 then hits the crop residue with hammers 7a and reduces its size.

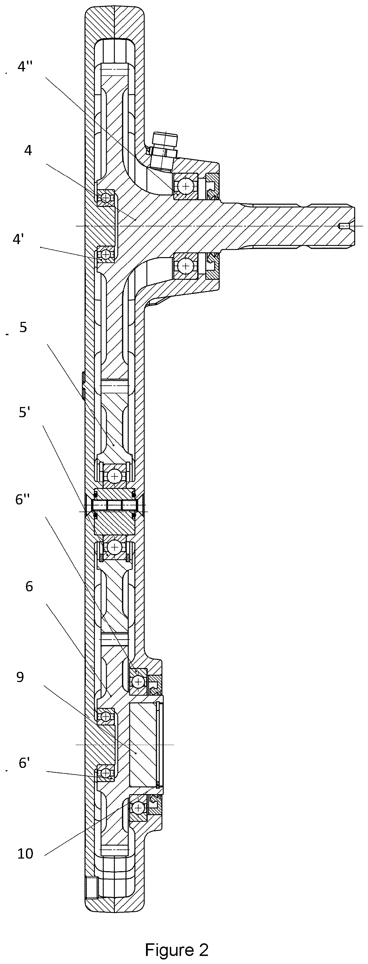

The gear transmission is designed to have the smallest possible width. The side section of the gear transmission in Figure 2 shows that the lowermost and uppermost gear 4 and 6 have integrated bearings 4' in 6' on the left side of the housing, which reduces the thickness of the overall transmission, with the sides of the gears preferably being only 5 mm away from the housing itself. The mentioned gears are extended to the right side, allowing them to be mounted to the right bearing 4" and 6". The middle gear 5 has only one bearing 5' in the middle, no additional bearing is needed as the remaining two gears provide stability for the middle gear. The parallel key 9 takes up minimal space and therefore does not require axial expansion, thus enabling a slim design of the gear housing.

## Claims

1. A flail mower with increased working width **characterised in that** transmission of torque to a rotor (7) with a gear transmission with spur gears (4, 5, 6), wherein the gear transmission comprises at least two spur gears (4, 5, 6).

2. The flail mower according to claim 1, which comprises:
- a housing (8) of the flail mower, wherein inside the housing (8) the rotor (7) with hammers (7a) is rotatably mounted,
- a gearbox (1) for changing the torque angle from a torque perpendicular to the rotor (7) to a torque parallel to the rotor (7),
- an element (2) for transferring torque with the mentioned gearbox for changing the torque angle to the gear transmission,
- a housing of the gear transmission, said housing being installed on one side of the housing (8) of the flail mower,
- gear transmission, which comprises at least two, preferably three spur gears (4, 5, 6), in contact with each other and arranged vertically, wherein the lowermost gear is connected to the rotor (7) with hammers (7a), and
- a connecting element (9) installed between one spur gear (6) and the rotor (7) for connecting these two elements.

3. The flail mower according to claim 2, wherein the gearbox for changing the torque angle is a bevel gearbox (1), a hydraulic drive or an electric motor drive, preferably the bevel gearbox (1) installed on the housing (8) of the flail mower.

4. The flail mower according to claim 2 or claim 3, wherein the element (2) for transferring torque is a second PTO shaft (2), which is on one end connected to the said gearbox (1) for changing the torque angle, preferably to the bevel gearbox (1), and on the second end onto one of at least two spur gears (4) of the gear transmission.

5. The flail mower according to claim 4, wherein the second PTO shaft (2) is provided with a shear clutch for overload protection.

6. The flail mower according to claim 5, wherein safety function of the shear clutch is enabled with a bolt located on a two-piece joint of the PTO shaft (2), wherein in an event of an overload, the bolt is cut off, causing the PTO shaft (2) connecting the bevel gearbox (1) and the gear transmission to rotate to idle as one part of the link rotates and the other stops.

7. The flail mower according to any claim from 2 to 6, wherein the connecting element is a parallel key (9), which is installed in a groove formed by grooves on the spur gear (6) and the rotor (7), and wherein it is secured with a retaining ring (10).

8. The flail mower according to claim 7, wherein the parallel key (9) is arranged to terminate torque transmission between the spur gear (6) and the rotor (7) in case it breaks due to an overload.

9. The flail mower according to any of the preceding claims, wherein the housing of the gear transmission and the gear transmission are designed as slim as possible, wherein at least two gears (4, 6) have integrated bearings (4', 6') on the left side of the housing and said gears (4, 6) are elongated to the right side so as to allow their mounting via a right bearing (4", 6"), and wherein the walls of the housing are as thin as possible, minimally 0.7 cm and preferably made by casting, and the housing extends radially.

10. The flail mower according to claim 9, wherein the gear transmission comprises three spur gears and the middle gear (5) is provided with only one bearing (5') in the middle.

11. The flail mower according to any of the preceding claims, which is a tractor flail mower.
